# EUROPÄISCHE PATENTSCHRIFT

(11) **EP 1 761 582 B1**
(45) Veröffentlichungstag und Bekanntmachung des Hinweises auf die Patenterteilung: **06.07.2011**
(21) Anmeldenummer: 05749134.2
(22) Anmeldetag: 09.05.2005
(51) Int. Cl.: C08G 63/553, C09D 167/06, C09J 167/06

(54) **STRAHLUNGSHÄRTBARE, HAFTUNGSVERBESSERNDE ZUSAMMENSETZUNG AUS UNGESÄTTIGTEN, AMORPHEN POLYESTERN UND REAKTIVVERDÜNNERN**
RADIATION CURABLE COMPOSITION CONSISTING OF UNSATURATED AMORPHOUS POLYESTERS AND REACTIVE DILUTANT AGENTS
COMPOSITION D'AMELIORATION D'ADHERENCE, DURCISSABLE PAR RAYONNEMENT, FORMEE DE POLYESTERS INSATURES AMORPHES ET DE DILUANTS REACTIFS

(30) Priorität: 01.07.2004 DE 102004031759
(43) Veröffentlichungstag der Anmeldung: 14.03.2007
(73) Patentinhaber: Evonik Degussa GmbH, 45128 Essen (DE)
(72) Erfinder: GLÖCKNER, Patrick, 45721 Haltern am See (DE); WENNING, Andreas, 48301 Nottuln (DE); DENKINGER, Peter, 48301 Nottuln (DE); RETZLAFF, Erika, 45772 Marl (DE)
(86) Internationale Anmeldenummer: PCT/EP2005/052085
(87) Internationale Veröffentlichungsnummer: WO 2006/003044

(56) Entgegenhaltungen:
- EP-A- 0 530 402
- EP-A- 1 398 337
- WO-A-03/080703
- DE-A1- 2 245 110
- DE-C- 953 117
- US-A- 4 322 504
- US-A- 6 143 841

## Beschreibung

Die Erfindung betrifft strahlungshärtbare, haflungsverbessernde Zusammensetzungen aus ungesättigten, amorphen Polyestern in reaktiven Lösemitteln, ein Verfahren zu ihrer Herstellung sowie ihre Verwendung insbesondere als haftungsverbessernde Zusätze für strahlungshärtbare Kleb- und Beschichtungsstoffe.

Strahlenhärtbare Beschichtungsstoffe haben innerhalb der letzten Jahre zunehmend an Bedeutung gewonnen, da der Gehalt an flüchtigen organischen Verbindungen (VOC) dieser Systeme gering ist. Die filmbildenden Komponenten sind im Beschichtungsstoff relativ niedermolekular und deshalb niedrigviskos, so dass auf hohe Anteile organischer Lösemittel verzichtet werden kann. Dauerhafte Beschichtungen werden erhalten, indem nach Applikation des Beschichtungsstoffes ein hochmolekulares, polymeres Netzwerk durch z. B. UV-Licht oder Elektronenstrahl-initiierte Vernetzungsreaktionen gebildet wird. Als Folge der Netzwerkbildung kommt es zu einem Volumenschrumpf, der in der Literatur als ein Grund für die teilweise schlechte Haftung von strahlungshärtbaren Beschichtungsstoffen auf unterschiedlichen Substraten angegeben wird [Surface Coatings International Part A, 2003/06, pp. 221-228].

Ungesättigte Polyesterharze (UP-Harze) sind bekannt Sie werden durch Kondensation von gesättigten und ungesättigten Dicarbonsäuren oder deren Anhydriden mit Diolen hergestellt. Ihre Eigenschaften hängen weitgehend von Art und Mengenverhältnis der Ausgangsstoffe ab.

Als Träger der polymerisationsfähigen Doppelbindungen werden meist α,β-ungesättigte Säuren verwendet, in erster Linie Maleinsäure bzw. deren Anhydrid oder Fumarsäure; ungesättigte Diole sind von untergeordneter Bedeutung. Je höher der Gehalt an Doppelbindungen, d. h. je kürzer der Abstand der Doppelbindungen in den Kettenmolekülen ist, desto reaktiver ist das Polyesterharz. Es polymerisiert sehr rasch unter starker Wärmeentwicklung und hoher Volumenschrumpfung zu einem hochvernetzten und daher verhältnismäßig sprödem Endprodukt. Man "verdünnt" deshalb die reaktionsfähigen Doppelbindungen im Polyestermolekül durch Einkondensieren gesättigter aliphatischer oder aromatischer Dicarbonsäuren. Als Alkoholkomponenten werden geradkettige und/oder verzweigte Diole verwendet. Die einzelnen UP-Harztypen unterscheiden sich nicht nur durch die zu ihrer Herstellung verwendeten Komponenten sondern auch durch das Mengenverhältnis von gesättigten zu ungesättigten Säuren, das die Vernetzungsdichte bei der Polymerisation bestimmt, den Kondensationsgrad, d h. die Molmasse, die Säure- und OH-Zahl, d. h. die Art der Endgruppen in den Kettenmolekülen, den Monomergehalt, die Art der Zusätze (Ullmann's Encyclopedia of Industrial Chemistry, VOL A21, S. 217 ff, 1992).

UP-Harze auf Basis von Dicidol als Diolkomponente sind z. B. bekannt aus DE 953 117, DE 22 45 110, DE 27 21 989, EP 0 114 208, EP 0 934 988.

Der Einsatz von ungesättigten Polyesterharzen zur Verbesserung der Haftung ist z. B. aus DE 24 09 800, EP 0 114 208 und EP 0 934 988 bekannt

DE 953 117 beschreibt ein Verfahren zur Herstellung von ungesättigten Polyestern, dadurch gekennzeichnet, dass ungesättigte Dicarbonsäuren mit polycyclischen, mehrwertigen Alkohole, deren Hydroxylgruppen auf verschiedenen Ringen eines zweckmäßig kondensierten Ringsystems verteilt sind, umgesetzt werden. Diese Polyester können mit Vinylverbindungen wie Styrol, Alkylstyrol, Chlorstyrol, Vinylnaphthalin und Vinylacetat polymerisiert werden, wobei dann klebfreie Filme erhalten werden. Im Gegensatz zu dem in der vorliegenden Erfindung verwendeten Dicidolgemisch der isomeren Verbindungen 3,8-Bis(hydroxymethyl)tricyclo[5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan wird in der DE 953 117 lediglich ein undefiniertes Diol mit einer vermuteten Struktur, ähnlich dem Dicidol, verwendet. Darüber hinaus werden dort gegebenenfalls Vinylverbindungen verwendet, die lediglich eine Doppelbindung, jedoch keine acrylische Doppelbindung enthalten. In der vorliegenden Erfindung werden Komponenten zur Reduktion der Viskosität eingesetzt, die sich von Acrylsäure, Methacrylsäure bzw. deren Derivaten ableiten und besonders bevorzugt mindestens zwei acrylische Doppelbindungen besitzen. Aromatische Vinylverbindungen wie in DE 953 117 beschrieben, können sich nachteilig z. B. auf Beständigkeitseigenschaften wie z. B. Bewitterungsstabilitäten, auswirken. Wie eingehende eigene Versuche gezeigt haben, wird des Weiteren mit Harz-Vinylmonomer-Zusammensetzungen wie in der DE 953 117 beschrieben, lediglich eine Verbesserung der Klebfreiheit erzielt. Die in der vorliegenden Erfindung hergestellten Verbindungen zeichnen sich dadurch aus, dass die Haftung von Beschichtungsstoffen verbessert wird, bei gleichzeitig verbessertem Korrosionsschutz, höherer Härte, verbessertem Glanz und Polymergehalt bei gleicher Viskosität des Lackes oder Klebstoffes sowie geringem Volumenschrumpf während der Vernetzung und einer guten Farbstabilität des vernetzten Polymers.

DE 22 45 110 beschreibt Polyestennassen aus ungesättigten Polyestern, Vinylmonomeren, Aktivatoren, und Zusatzstoffen für die Herstellung von Überzügen, die mittels IR-Strahlung gehärtet werden können, und die die Schleifbarkeit, Häramgseigenschaften und Stapelbarkeit verbessern sollen. Neben den Anmerkungen zu DE 953 117, befasst sich die vorliegende Erfindung mit UV- bzw. Elektronenstrahlhärtenden Kleb- und Beschichtungsstoffsystemen.

Die Verbindungen, die in DE 27 21 989 beschrieben werden, sind lediglich einer Vernetzung mit Aminoplasten zugänglich. Das dort beschriebene Polyestergrundgerüst besitzt ausschließlich gesättigten Charakter. Eine Vernetzung via freier radikalischer Polymerisation, die durch Strahlungsenergie eingeleitet werden kann, ist nicht möglich. Darüber hinaus ist bekannt, dass sich die in der DE 27 21 989 verwendeten hohen Anteile an Terephthalsäure negativ auf Beständigkeitseigenschaften wie z. B. Bewitterungsbeständigkeiteigenschaften auswirken.

Die in DE-OS 102 12 706, EP 0 114 208 sowie EP 0 934 988 beanspruchten Harze sind ebenfalls nicht für die Verwendung in strahlungshärtenden Beschichtungsstoffen geeignet

WO 89/07622 beschreibt gegenüber Strahlung beständige acrylstyrolhaltige Polyester und Polycarbonate, die ggf Dicidol enthalten könnten, für die Verpackung von z. B. Lebensmitteln wie Fruchtsäften, Softdrinks, Wein, usw. Die der vorliegenden Erfindung zugrunde liegenden ungesättigten Polyester sind frei von Acylstyryl-Einheiten und darüber hinaus strahlungshärtend.

Ebenfalls nicht strahlungsvernetzende Zusammensetzungen werden in DE 102 05 065 beschrieben. Die dort verwendeten Polyesterharze enthalten statt der in der vorliegenden Erfindung verwendeten Bis(hydroxymethyl)-tricyclopentadien-Derivate lediglich Dicyclopentadien, das einer direkten Veresterung nicht zugänglich ist. Hierdurch müssen besonders druckfeste und damit hochpreisige Reaktoren zur Herstellung verwendet werden, was aus wirtschaftlichen Gesichtspunkten nicht empfehlenswert ist.

Aufgabe der vorliegenden Erfindung war es, eine haftverbessemde Zusammensetzung zu finden, die Eigenschaften von strahlenhärtbaren Kleb- und Beschichtungsstoffen, wie z. B. die Haftung von Beschichtungsstoffen, verbessert und gleichzeitig hohen Korrosionsschutz, hohe Härte, verbesserten Glanz der Beschichtung und eine geringe Viskosität des Lackes sowie einen geringeren Volumenschrumpf während der Vernetzung aufweist.

Gegenstand der Erfindung ist eine strahlungshärtbare, haftungsverbessernde Zusammensetzung bestehend aus A)mindestens einen ungesättigten, amorphen Polyester, bestehend aus mindestens einer α,β-ungesättigten Dicarbonsäurekomponente und einer Alkoholkomponente, wobei die Alkoholkomponente aus einem Dicidolgemisch der isomeren Verbindungen 3,8-Bis(hydroxymethyl)tricyclo[5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan besteht, jedes Isomere zu einem Anteil von 20 bis 40 % in dem Gemisch enthalten sein kann und die Summe der drei Isomeren 90 bis 100 % ergibt, und das Gemisch mindestens zu 5 % in der Alkoholkomponente des Polyesters enthalten ist;
und
B) mindestens ein polymerisierbares Lösemittel (Reaktivverdünner), das acrylisch oder methacrylisch ungesättigte Doppelbindungen aufweist.

Weiterer Gegenstand der Erfindung ist die Verwendung von Zusammensetzungen aus ungesättigten, amorphen Polyestern und mindestens einem Reaktivverdünner, der über acrylisch bzw. methacrylisch ungesättigte Doppelbindungen verfügt, als strahlungshärbare, haftungsverbessernde Zusätze.

Es hat sich gezeigt, dass eine universelle Verträglichkeit dieser Zusammensetzung mit weiteren Bestandteilen von strahlungshärtbaren Beschichtungsstoffen und/oder Klebstoffen und/oder Dichtmassen besteht Beispielsweise können die erfindungsmgemäßen Zusammensetzungen gemischt werden mit acrylierten Polyestern, Polyacrylaten, Polyesterurethanen, Epoxyacrylaten oder Polyetheracrylaten sowie Alkydharzen, Keton-Formaldehydharzen, Ketonharzen, ungesättigten Polyestern.

Die erfindungsgemäßen Zusammensetzungen können z. B. als Bindemittel in strahlungshärtenden Beschichtungsstoffen eingesetzt werden und durch radikalische Polymerisation korrosionsbeständige Beschichtungen bilden. Die gute Haftung und die Möglichkeit, Vermetzungsreaktionen einzugehen, prädestinieren die erfindungsgemäßen Harze für den Korrosionsschutz. Zusätzlich wird die Haftung auf unterschiedlichen Kunststoffen verbessert. Neben der Erhöhung der Haftung wird außerdem die Zwischenschichthaftung zu darüber liegenden und darunter liegenden Grenzschichten verbessert. Ein weiterer Vorteil der erfindungsgemäßen Zusammensetzungen ist die hohe Hydrolysebeständigkeit. Beschichtungsstoffe, die einen erfindungsgemäßen Zusatz enthalten, zeichnet außerdem ein hoher Glanz und ein guter Verlauf aus.

Die strahlungshärtbaren, haftungsverbessernden Zusammensetzungen werden insbesondere in strahlungshärtenden Beschichtungsstoffen, Klebstoffen, Laminierungen, Druckfarben und Tinten, Polituren, Lasuren, Pigmentpasten, Spachtelmassen, Kosmetikartikeln, Verpackungsmaterialien und/oder Dicht- und Dämmstoffen, insbesondere zur Verbesserung der Haftungseigenschaften und der Härte verwendet. Dabei ergeben sich sehr gute Haftungseigenschaften zu unterschiedlichen Untergründen wie z. B. Metallen, mineralischen Untergründen, Kunststoffen wie z. B. Polyethylen, Polypropylen oder Polycarbonat, Polymethylmethacrylat, ABS, aber auch zu Holz, Glas, Keramik.

Im Folgenden werden die erfindungsgemäßen strahlungshärtbaren, haftungsverbessernden Zusammensetzungen aus ungesättigten, amorphen Polyestern und reaktiven Lösemitteln näher beschrieben.

Die ungesättigten, amorphen Polyesterharze werden durch Umsetzung der Alkoholkomponente und der Säurekomponente erhalten.

Als Alkoholkomponente wird erfindungsgemäß ein Dicidolgemisch der isomeren Verbindungen 3,8-Bis(hydroxymethyl)tricyclo[5.2.1.0^{2,6}]decan, 4,8-Bis(hydroxymethyl)tricyclo[5.2.1.0^{2,6}]decan und 5,8-Bis(hydroxymethyl)tricyclo[5.2.1.0^{2,6}]decan eingesetzt, wobei jedes Isomere zu einem Anteil von 20 bis 40 % in dem Gemisch enthalten sein kann und die Summe der drei Isomeren 90 bis 100 %, bevorzugt 95 bis 100%, ergibt, und das Gemisch mindestens zu 5 % in der Alkoholkomponente des Polyesters vorhanden ist, eingesetzt. Der Isomergehalt des Dicidolgemisches kann qualitativ und quantitativ z. B. durch GC-Analyse oder quantitativ durch Trennung mittels präparativer GC oder HPLC und anschließender NMR-Spektroskopie bestimmt werden. Alle entsprechenden Isomeren des Dicidols in 9-Stellung sind genau so geeignet, aber auf Grund der Spiegelsymmetrie von den o. g. Isomeren, wie auch die cis- und trans-Isomeren, unter normalen, praxisbezogenen Umständen nicht unterscheidbar.

Außerdem kann das Dicidolgemisch bis zu 10 % weitere Isomere des Dicidol und/oder trimere und/oder höhere isomere Diole des Diels-Alder-Umsetzungsproduktes aus Cyclopentadien enthalten. Bevorzugt besteht die Alkoholkomponente aus 20 %, aus 50 %, bevorzugt aus 90 %, besonders bevorzugt aus 100 % Dicidolgemisch, wobei dieses besonders bevorzugt 95 bis 100 % der oben genannten drei isomeren Verbindungen enthält.

Neben dem Dicidolgemisch kann die Alkoholkomponente weitere lineare und/oder verzweigte, aliphatische und/oder cycloaliphatische und/oder aromatische Diole und/oder Polyole enthalten. Bevorzugt werden als zusätzliche Alkohole Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit sowie Bisphenol A, B, C, F, Norbornylenglykol, 1,4-Benzyldimethanol und -ethanol, 2,4-Dimethyl-2-ethylhexan-1,3-diol eingesetzt

Die ungesättigten, amorphen Polyesterharze enthalten als Ausgangssäurekomponente mindestens eine α,β-ungesättigte Dicarbonsäure. Bevorzugt enthalten die ungesättigten Polyesterharze Citracon-, Fumar-, Itacon-, Malein- und/oder Mesaconsäure.

Es können auch zusätzlich aromatische und/oder aliphatische und/oder cycloaliphatische Monocarbonsäuren und/oder Dicarbonsäuren und/oder Polycarbonsäuren enthalten sein, wie z. B. Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Isononansäure, 2-Ethylhexansäure, Pyromellitsäure und/oder Trimellitsäure. Bevorzugt sind Phthalsäure, Hexahydrophthalsäure, Tetrahydrophthalsäure, Adipin- und/oder Azelainsäure.

Die Säurekomponente kann teilweise oder vollständig aus Anhydriden und/oder Alkylestern, bevorzugt Methylestern, bestehen.

Im Allgemeinen ist die Alkoholkomponente im Mol-Verhältnis von 0,5 bis 2,0 zu 1 zur Säurekomponente enthalten, bevorzugt 0,8 bis 1,5 zu 1. Besonders bevorzugt findet die Umsetzung der Alkoholkomponente im Mol-Verhältnis von 1,0 bis 1,1 zu 1 zur Säurekomponente statt.

Die ungesättigten, amorphen Polyester können eine Säurezahl zwischen 1 und 200 mg KOH/g, bevorzugt zwischen 1 und 100, besonders bevorzugt zwischen 1 und 50 mg KOH/g sowie eine OH-Zahl zwischen 1 und 200 mg KOH/g, bevorzugt zwischen 1 und 100, besonders bevorzugt zwischen 1 und 50 mg KOH/g aufweisen.

Der Tg der ungesättigten, amorphen Polyester variiert von -30 bis +80 °C, bevorzugt -20 bis +50 °C, besonders bevorzugt - 10 bis + 40 °C.

In einer bevorzugten Ausführungsform I bestehen die ungesättigten Polyester (UP-Harze) aus einer Alkoholkomponente mit mindestens 90 %, bevorzugt 95 %, besonders bevorzugt zu 100 % des Dicidolgemisches der isomeren Verbindungen 3,8-Bis(hydroxymethyl)tricyclo[5.2.1.0^{2,6}]decan, 4,8-Bis(hydroxymethyl)tricyclo[5.2.1.0^{2,6}]decan und 5,8-Bis(hydroxymethyl)tricyclo[5.2.1.0^{2,6}]decan und aus Fumarsäure und/oder Maleinsäure(anhydrid). In einer weiteren bevorzugten Ausführungsform II enthalten die Polyester die o. g. Ausgangskomponenten wie unter I, aber zusätzlich eine weitere Säure ausgewählt aus Adipinsäure, Dodecandisäure oder Phthalsäure(anhydrid), wobei das Verhältnis der α, β-ungesättigten zur zusätzlichen Säure von 2 zu 1 bis 1 zu 4 variieren kann. Bevorzugt werden Verhältnisse von ca. 1 zu 1 bis 1 zu 2. Diese Polyester weisen allgemein Säurezahlen von 1 bis 200 mg KOH/g, bevorzugt 1 - 100 mg KOH/g, besonders bevorzugt 1 - 50 mg KOH/g, OH-Zahlen von 1 bis 200 mg KOH/g, bevorzugt 1 - 100 mg KOA/g, besonders bevorzugt 1 - 50 mg KOH/g und einen Tg von -30 bis +80 °C, bevorzugt -20 bis +50 °C, besonders bevorzugt -10 bis +40 °C auf:

Bevorzugte reaktive Lösemittel (Reaktionsverdünner) sind Acrylsäure und/oder Methacrylsäure, C₁-C₄₀-Alkylester und/oder Cycloalkylester der Methacrylsäure und/oder Acrylsäure, Glycidylmethacrylat, Glycidylacrylat, 1,2-Epoxybutylacrylat, 1,2-Epoxybutylmethacrylat, 2,3-Epoxycyclopentylacrylat, 2,3-Epoxycyclopentylmethacrylat sowie die analogen Amide, wobei auch Styrol und/oder dessen Derivate in untergeordnetem Maße zugegen sein können.

Besonders bevorzugt sind Phenoxyethylacrylat, Ethoxyethoxyethylacrylat, Isodecylacrylat und Isobornylacrylat.

Eine weitere bevorzugte Klasse von strablungsreaktiven Lösemitteln (Reaktionsverdünner) sind Di- Tri- und/oder Tetraacrylate und deren Methacrylanaloga, die sich formal aus den Umsetzungsprodukten von Acrylsäure bzw. Methacrylsäure und einer Alkoholkomponente unter Wasserabspaltung ergeben. Als dafür gebräuchliche Alkoholkomponente werden z. B. Ethylenglykol, 1,2-, 1,3-Propandiol, Diethylen-, Di- und Tripropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4-und 2,3-Butylenglykol, Di-ß-hydroxyethylbutandiol, 1,5-Pentandiol, 1,6-Hexandiol, 1,8-Octandiol, Decandiol, Dodecandiol, Neopentylglykol, Cyclohexandiol, Trimethylolpropan, 3(4),8(9)-Bis(hydroxymethyl)-tricyclo[5.2.1.0^{2,6}]decan, 2,2-Bis-(4-hydroxycyclohexyl)propan, 2,2-Bis-[4-(ß-hydroxyethoxy)phenyl]propan, 2-Methylpropandiol-1,3, 2-Methylpentandiol-1,5, 2,2,4(2,4,4)-Trimethylhexandiol-1,6, Hexantriol-1,2,6, Butantriol-1,2,4, Tris-(ß-hydroxyethyl)isocyanurat, Mannit, Sorbit, Polypropylenglykole, Polybutylenglykole, Xylylenglykol oder Hydroxypivalinsäureneopentylglykolester, allein oder in Mischungen, eingesetzt.

Besonders bevorzugt sind jedoch Dipropylenglykoldiacrylat (DPGDA) und/oder Tripropylenglykoldiacrylat (TPGDA), Hexandioldiactylat (HDDA), Trimethylolpropantriacrylat allein oder in Mischung.

Im Allgemeinen können aber alle in der Literatur für strahlungshärtbare Lacke als geeignet genannte Reaktivverdünner eingesetzt werden.

Die erfindungsgemäßen Zusammensetzungen können auch Hilfs- und Zusatzstoffe wie zum Beispiel Inhibitoren, Wasser und/oder organischen Lösemitteln, Neutralisationsmitteln, grenzflächenaktiven Substanzen, Sauerstoff- und/oder Radikalfängern, Katalysatoren, Lichtschutzmitteln, Farbauftellern, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzausrüstungen, internen Trennmitteln, Füllstoffen und/oder Treibmitteln, enthalten.

Hergestellt werden die erfindungsgemäßen Zusammensetzungen durch (halb)kontinuierliche oder diskontinuierliche Veresterung und Kondensation der Ausgangssäuren und -alkohole in einstufiger oder mehrstufiger Fahrweise und anschließendem Mischen mit den Reaktivverdünnern in kontinuierlicher oder diskontinuierlicher Fahrweise.

Gegenstand der Erfindung ist auch ein Verfahren zur Herstellung von strahlungshärtbaren, haftungsverbessernden Zusammensetzungen, bestehand aus
A) mindestens einen ungesättigten, amorphen Polyester, bestehend aus mindestens einer α,β-ungesättigten Dicarbonsäurekomponente und einer Alkoholkomponente, wobei die Alkoholkomponente aus einem Dicidolgemisch der isomeren Verbindungen 3,8-Bis(hydroxymethyl)tricyclo[5.2.1.0^{2,6}]decan, 4,8-Bis(hydroxymethyl)tricyclo[5.2.1.0^{2,6}]decan und 5,8-Bis(hydroxymethyl)tricyclo[5.2.1.0^{2,6}]decan besteht,
   jedes Isomere zu einem Anteil von 20 bis 40 % in dem Gemisch enthalten sein kann und die Summe der drei Isomeren 90 bis 100 % ergibt, und das Gemisch mindestens zu 5 % in der Alkoholkomponente des Polyesters enthalten ist;
   und
B) mindestens ein polymerisierbares Lösemittel (Reaktivverdünner), das acrylisch oder methacrylisch ungesättigte Doppelbindungen aufweist,
   durch Umsetzung der Ausgangskomponenten von A) bei einer Temperatur von 150 bis 270 °C, bevorzugt 160 bis 230 °C, besonders bevorzugt 160 bis 200 °C und anschließender Verdünnung mit einem Reaktivverdünner B) bei Temperaturen unterhalb von 200 °C, bevorzugt unterhalb von 180 °C, besonders bevorzugt unterhalb von 160 °C.

Die folgenden Beispiele sollen die Erfindung weiter erläutern, aber nicht ihren Anwendungsbereich beschränken.

### Beispiele

Ausgangskomponente Dicidolgemisch im Isomerverhältnis von annähernd 1:1:1.

### Beispiel 1

Dodecandisäure und Fumarsäure (Verhältnis 0,6 : 0,4) werden mit Dicidol im Verhältnis 1 : 1,05 bei 180 °C in Stickstoffatmosphäre zur Reaktion gebracht bis eine Säurezahl von 24 mg KOH/g und eine OH-Zahl von 34 mg KOH/g erreicht ist. Hierzu wird zunächst die Fumarsäure mit Dicidol über eine Stunde verestert und dann die Dodecandisäure zugesetzt. Das Harz wird 50%ig in TPGDA gelöst Mₙ = 2200 g/mol M_{w} = 5500 g/mol, Glasübergangstemperatur 4 °C.

### Anwendungsbeispiel

Als Basisharz (UV 20) diente ein Addukt aus Trimethylolpropan, Isophorondiisocyanat, Terathane 650 sowie Hydroxyethylacrylat, 70%ig gelöst in TPGDA, Viskosität 23 °C = 20,9 Pas.

| Formulierung | A | B |
|---|---|---|
| UV 20 | 100 g | 100 g |
| Harz aus Beispiel 1 | - | 100 g |
| TPGDA | 16,7 g | 4 g |

Die Harzlösungen A und B wurden mit Darocur 1173 (Ciba Specialty Chemicals, 1,5 % bez. auf Festharz) versehen, mit einem Rakel auf eine Glasplatte sowie auf Bonderbleche aufgetragen. Dann wurden die Filme mittels UV-Licht (Quecksilber-Mitteldruck-Lampe, 70 W / optischer Filter 350 mn).ca. 16 sec. lang ausgehärtet. Die zuvor löslichen Filme sind nicht mehr löslich in Methylethylketon.

| **Lack-Nr.** | **SD** [µ] | **ET** [mm] | **HK** [s] | **Peugeot Test** | **MEK-Test** [Doppelhübe] |
|---|---|---|---|---|---|
| A | 29-34 | 7 | 115 | ++ | > 100 |
| B | 33-36 | 7 | 148 | ++ | > 150 |

### Gitterschnittprüfung auf unterschiedlichen Substraten

| **Lack-Nr.** | **ABS** | **PC** | **PE** | **PP** | **PS** | **Metall** |
|---|---|---|---|---|---|---|
| A | 1 | 4 | 4 | 5 | 4 | 2 |
| B | 0 | 0 | 2 | 2 | 1 | 0 |

| | | | | | | |
|---|---|---|---|---|---|---|
| 0 = keine Enthaftung; 5 = vollständiger Haftungsverlust ABS: (Acrylnitril-Butadien-Styrol)-Terpolymer ET: Erichsentiefung HK: Pendelhärte nach König PC: Polycarbonat PE: Polyethylen PP: Polypropylen PS: Polystyrol SD: Schichtdicke | | | | | | |

## Patentansprüche

1. Strahlungshärtbare, haftungsverbessernde Zusammensetzung bestehend aus
A) einen oder mehreren ungesättigten, amorphen Polyester, bestehend aus mindestens einer α,β-ungesättigten Dicarbonsäurekomponente und einer Alkoholkomponente, wobei die Alköhölkomponente aus einem Dicidolgemisch der isomeren Verbindungen 3,8-Bis(hydroxymethyl)tricyclo[5.2.1.0^{2,6}]decan, 4,8-Bis(hydroxymethyl)tri-cyclo[5.2.1.0^{2,6}]decan und 5,8-Bis(hydroxymethyl)tricyclo [5.2.1.0^{2,6}]decan besteht, jedes Isomere zu einem Anteil von 20 bis 40 % in dem Gemisch enthalten sein kann und die Summe der drei Isomeren 90 bis 100 % ergibt, und das Gemisch mindestens zu 5 % in der Alkoholkomponente des Polyesters enthalten ist;
B) ein oder mehreres polymerisierbares Lösemittel (Reaktivverdünner), das acrylisch oder methacrylisch ungesättigte Doppelbindungen aufweist.

2. Strahlungshärtbare, haftungsverbessernde Zusammensetzung nach Anspruch 1,
**dadurch gekennzeichnet,**
**dass** bis zu 10 % weitere Isomere des Dicidols und/oder trimere und/oder höhere isomere Diole des Diels-Alder-Umsetzungsproduktes aus Cyclopentadien enthalten sind.

3. Strahlungshärtbare, haftungsverbessernde Zusammensetzung nach einem der vorherigen Ansprüche,
**dadurch gekennzeichnet,**
**dass** die Säurekomponente zusätzlich aromatische und/oder aliphatische und/oder cycloaliphatische Monocarbonsäuren und/oder Dicarbonsäuren und/oder Polycarbonsäuren enthält.

4. Strahlungshärtbare, haftungsverbessernde Zusammensetzung nach einem der vorherigen Ansprüche,
**dadurch gekennzeichnet;**
**dass** die Säurekomponente teilweise oder ganz aus Anhydriden und/oder Alkylestern besteht.

5. Strahlungshärtbare, haftungsverbessernde Zusammensetzung nach einem der vorherigen Ansprüche,
**dadurch gekennzeichnet,**
**dass** die Alkoholkomponente weitere lineare und/oder verzweigte, aliphatische und/oder cycloaliphatische und/oder aromatische Diole und/oder Polyole enthält.

6. Strahlungshärtbare, haftungsverbessernde Zusammensetzung nach einem der vorherigen Ansprüche,
**dadurch gekennzeichnet,**
**dass** als α,β-ungesättigte Dicarbonsäure Citracon-, Fumar-, Itacon-, Malein- und/oder Mesaconsäure enthalten ist

7. Strahlungshärtbare, haftungsverbessernde Zusammensetzung nach einem der vorherigen Ansprüche,
**dadurch gekennzeichnet,**
**dass** als zusätzliche Säuren Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Pyromellitsäure und/oder Trimellitsäure, deren Säureanhydride und/oder Methylester enthalten sind sowie Isononansäure und/oder 2-Ethylhexansäure, allein oder in Mischungen.

8. Strahlungshärtbare, haftungsverbessernde Zusammensetzung nach einem der vorherigen Ansprüche,
**dadurch gekennzeichnet,**
**dass** als zusätzliche Alkohole Ethylenglykol, 1,2- und/oder 1,3-Propandiol, Dielhylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit, Bisphenol A, B, C, F, Norbornylenglykol, 1,4-Benzyldimethanol und -ethanol, 2,4-Dimethyl-2-ethylhexan-1,3-diol allein oder in Mischungen, enthalten sind.

9. Strahlungshärtbare, haftungsverbessernde Zusammensetzung nach einem der vorherigen Ansprüche,
**dadurch gekennzeichnet,**
**dass** die Alkoholkomponente mindestens zu 20 % aus den Isomeren gemäß Anspruch 1 oder 2 besteht.

10. Strahlungshärtbare, haftungsverbessernde Zusammensetzung nach einem der vorherigen Ansprüche,
**dadurch gekennzeichnet,**
**dass** die Alkoholkomponente mindestens zu 50 % aus den Isomeren gemäß Anspruch 1 oder 2 besteht.

11. Strahlungshärtbare, haftungsverbessernde Zusammensetzung nach einem der vorherigen Ansprüche,
**dadurch gekennzeichnet,**
**dass** die Alkoholkomponente zu mindestens 90 % aus den Isomeren gemäß Anspruch 1 oder 2 besteht.

12. Strahlungshärtbare, haftungsverbessernde Zusammensetzung nach einem der vorherigen Ansprüche,
**dadurch gekennzeichnet,**
**dass** die Alkoholkomponente zu 100 % aus den Isomeren gemäß Anspruch 1 oder 2 besteht.

13. Strahlungshärtbare, haftungsverbessernde Zusammensetzung nach einem der vorherigen Ansprüche,
**dadurch gekennzeichnet,**
**dass** als α,β-ungesättigte Säurekomponente Fumarsäure und/oder Maleinsäure(anhydrid) enthalten sind

14. Strahlungshärtbare, haftungsverbessernde Zusammensetzung nach einem der vorherigen Ansprüche,
**dadurch gekennzeichnet,**
**dass** als weitere Dicarbonsäurekomponente Adipinsäure und/oder Phthalsäure(anhydrid) enthalten sind

15. Strahlungshärtbare, haftungsverbessernde Zusammensetzung nach einem der vorherigen Ansprüche,
**dadurch gekennzeichnet,**
**dass** die Alkoholkomponente im Mol-Verhältnis von 0,5 bis 2,0 zu 1 zur Säurekomponente enthalten ist.

16. Strahlungshärtbare, haflungsverbessernde Zusammensetzung nach einem der vorherigen Ansprüche,
**dadurch gekennzeichnet,**
**dass** die Alkoholkomponente im Mol-Verhältnis von 0,8 bis 1,5 zu 1 zur Säurekomponente enthalten ist.

17. Strahlungshärtbare, haftungsverbessernde Zusammensetzung nach einem der vorherigen Ansprüche,
**dadurch gekennzeichnet,**
**dass** die Alkoholkomponente im Mol-Verhältnis von 1,0 bis 1,1 zu 1 zur Säurekomponente enthalten ist

18. Strahlungshärtbare, haftungsverbessernde Zusammensetzung nach einem der vorherigen Ansprüche,
**dadurch gekennzeichnet,**
**dass** dieser eine Säurezahl zwischen 1 und 200 mg KOH/g, bevorzugt zwischen 1 und 100, besonders bevorzugt zwischen 1 und 50 mg KOH/g, aufweist.

19. Strahlungshärtbare, haflungsverbessernde Zusammensetzung nach einem der vorherigen Ansprüche,
**dadurch gekennzeichnet,**
**dass** dieser eine OH-Zahl zwischen 1 und 200 mg KOH/g, bevorzugt zwischen 1 und 100, besonders bevorzugt zwischen 1 und 50 mg KOH/g, aufweist

20. Strahlungshärtbare, haftungsverbessernde Zusammensetzung nach einem der vorherigen Ansprüche,
**dadurch gekennzeichnet,**
**dass** als Komponente B) (Reaktivverdünner) Acrylsäure und/oder Methacrylsäure, C₁-C₄₀-Alkylester und/oder Cycloalkylester der Methacrylsäure und/oder Acrylsäure, Glycidylmethacrylat, Glycidylacrylat, 1,2-Epoxybutylacrylat, 1,2-Epoxybutylmethacrylat, 2,3-Epoxycyclopentylacrylat, 2,3-Epoxycyclopentylmethacrylat sowie die analogen Amide und/oder Styrol und/oder deren Derivate, allein oder in Mischungen, enthalten sind.

21. Strahlungshärtbare, haftungsverbessernde Zusammensetzung nach einem der vorherigen Ansprüche,
**dadurch gekennzeichnet,**
**dass** als Komponente B) (Reaktivverdünner) Phenoxyethylacrylat, Ethoxyethoxyethylacrylat, Isodecylacrylat und Isobornylacrylat, allein oder in Mischungen, enthalten sind.

22. Strahlungshärtbare, haftungsverbessernde Zusammensetzung nach einem der vorherigen Ansprüche,
**dadurch gekennzeichnet,**
**dass** als Komponente B) (Reakbvverdünner) Di-, Tri- und/oder Tetraacrylate und deren Methacrylatanaloga, allein oder in Mischungen, enthalten sind

23. Strahlungshärtbare, haftungsverbessernde Zusammensetzung nach einem der vorherigen Ansprüche,
**dadurch gekennzeichnet,**
**dass** als Komponente B) (Reaktivverdünner) Di-, Tri- und/oder Tetaacrylate und deren Methacrylatanaloga von Ethylenglykol, 1,2-, 1,3-Propandiol, Diethylen-, Di- und Tripropylen-, Triethylen-, Tetraethylenglykol, 1,2-, 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hesandiol, Neopentylglykol, Trimethylolethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-ß-hydroxyethylbutandiol, 1,5-Pentandiol, 1,6-Hexandiol, 1,8-Octandiol, Decandiol, Dodecandiol, Neopentylglykol, Cyclohexandiol, Trimethylolpropan, 3(4),8(9)-Bis(hydroxymethyl)-tricyclo[5.2.1.0^{2,6}]decan, 2,2-Bis-(4-hydroxycyclohexyl)propan, 2,2-Bis[4-(ß-hydroxyethoxy)phenyl]propan, 2-Methylpropandiol-1,3, 2-Methylpentandiol-1,5, 2,2,4(2,4,4)-Trimethylhexandiol-1,6, Hexantriol-1,2,6, Butantriol-1,2,4, Tris-(β-hydroxyethyl)isocyanurat, Mannit, Sorbit, Polypropylenglykole, Polybutylenglykole, Xylylenglykol oder Hydroxypivalinsäureneopentylglykolester, allein oder in Mischungen, enthalten sind.

24. Strahlungshärtbare, haftungsverbessernde Zusammensetzung nach einem der vorherigen Ansprüche,
**dadurch gekennzeichnet,**
**dass** Di- und/oder Tripropylenglykoldiacrylat, Hexandioldiacrylat, Trimethylolpropantriacrylat, allein oder in Mischung, enthalten sind.

25. Strahlungshärtbare, haftungsverbessernde Zusammensetzung nach einem der vorherigen Anspruche,
**dadurch gekennzeichnet**
**dass** die Alkoholkomponente aus mindestens 90 % Dicidolgemisch gemäß Anspruch 1 und/oder Anspruch 2 besteht und Fumarsäure und/oder Maleinsäure (anhydrid) im Diol/Säure-Verhältnis 0,9 bis 1,1 zu 1 enthalten ist

26. Strahlungshärtbare, haftungsverbessernde Zusammensetzung nach einem der vorherigen Ansprüche,
**dadurch gekennzeichnet,**
**dass** zusätzlich Dodecandisäure, Adipinsäure und/oder Phthalsäure(anhydrid) als Säurekomponente enthalten sind in einem Verhältnis α,β-ungesättigte zur zusätzlichen Säure von 3 zu 1 bis 1 zu 4, bevorzugt von 1 zu 1 bis 1 zu 2.

27. Verfahren - zur Herstellung von strahlungshärtbaren haftungsverbessernden Zusammensetzungen, bestehend aus.
A) einem oder mehreren ungesättigten, amorphen Polyester, bestehend aus mindestens einer α,β-ungesättigten Dicarbonsäurekomponente und einer Alkoholkomponente, wobei die Alkohokomponente aus einem Dicidolgemisch der isomeren Verbindungen 3,8-Bis(hydroxymethyl)tricyclo[5.2.1.0^{2,6}]decan, 4,8-Bis(hydroxymethyl)tricyclo[5.2.1.0^{2,6}]decan und 5,8-Bis(hydroxymethyl)tricyclo[5.2.1.0^{2,6}]decan besteht,
jedes Isomere zu einem Anteil von 20 bis 40 % in dem Gemisch enthalten sein kann und die Summe der drei Isomeren 90 bis 100 % ergibt, und das Gemisch mindestens zu 5 % in der Alkoholkomponente des Polyesters enthalten ist;
und
B) ein oder mehrere polymerisierbare Lösemittel (Reaktivverdünner), das acrylisch oder methacrylisch ungesättigte Doppelbindungen aufweist,
durch Umsetzung der Ausgangskomponenten von A) bei einer Temperatur von 150 bis 270 °C, bevorzugt 160 bis 230 °C, besonders bevorzugt 160 bis 200 °C und anschließender Verdünnung mit einem Reaktivverdünner B) bei Temperaturen unterhalb von 200 °C, bevorzugt unterhalb von 180 °C, besonders bevorzugt unterhalb von 160°C.

28. Verwendung von ungesättigten, amorphen Polyestern A) und mindestens einem polymerisierbaren Lösemittel (Reaktivverdümner) B) nach Anspruch 1-26 als stzahlungshärbarer, haftungsverbessemder Zusatz.

29. Verwendung nach Anspruch 28 als strahlungshärtbarer, haftungsverbessernder Zusatz in strahlungshärtbaren Beschichtungsmitteln, die Wasser und/oder Lösemittel enthalten oder frei von organischen Lösemitteln und/oder Wasser sind.

30. Verwendung nach Anspruch 29 als strahlungshärtbarer, haftumgsverbessernder Zusatz in Beschichtungsstoffen, Klebstoffen, Laminierungen, Druckfarben und Tinten, Polituren, Lasuren, Pigmentpasben, Spachtelmassen, Kosmetikartikeln, Verpackungsmaterialien und/oder Dicht und Dämmstoffen.

31. Verwendung nach Anspruch 30 für metallische oder mineralische Untergründe, Holz, Papier, Kunststoff, Keramik oder Glas.

## Claims

1. Radiation-curable adhesion-promoting composition composed of
A) one or more than one unsaturated amorphous polyester composed of at least one α,β-unsaturated dicarboxylic acid component and an alcohol component, the alcohol component being composed of a Dicidol mixture of the isomeric compounds 3, 8-bis (hydroxymethyl) tricyclo[5.2.1.0^{2,6}]decane, 4, 8-bis (hydroxymethyl) tricyclo[5.2.10^{2,6}]decane and 5, 8-bis (hydroxymethyl) tricyclo[5.2.1.0^{2,6}]decane, where each isomer can be present in the mixture in a fraction of from 20% to 40%, the sum of the three isomers making from 90% to 100% and said mixture being present at not less than 5% in the alcohol component of the polyester;
and
B) one or more than one polymerizable solvent (reactive diluent) which contains acrylically or methacrylically unsaturated double bonds.

2. Radiation-curable adhesion-promoting composition according to Claim 1, **characterized in that** up to 10% of other isomers of Dicidol and/or trimeric and/or higher isomeric diols of the Diels-Alder reaction product of cyclopentadiene are present.

3. Radiation-curable adhesion-promoting composition according to either of the preceding claims, **characterized in that** the acid component further comprises aromatic and/or aliphatic and/or cycloaliphatic monocarboxylic and/or dicarboxylic and/or polycarboxylic acids.

4. Radiation-curable adhesion-promoting composition according to any one of the preceding claims, **characterized in that** the acid component is composed in whole or in part of anhydrides and/or alkyl esters.

5. Radiation-curable adhesion-promoting composition according to any one of the preceding claims, **characterized in that** the alcohol component comprises further linear and/or branched, aliphatic and/or cycloaliphatic and/or aromatic diols and/or polyols.

6. Radiation-curable adhesion-promoting composition according to any one of the preceding claims, **characterized in that** citraconic, fumaric, itaconic, maleic and/or mesaconic acid is present as α,β-unsaturated dicarboxylic acid.

7. Radiation-curable adhesion-promoting composition according to any one of the preceding claims, **characterized in that** phthalic acid, isophthalic acid, terephthalic acid, 1,4-cyclohexanedicarboxylic acid, succinic acid, sebacic acid, methyltetrahydrophthalic, methylhexahydrophthalic acid, hexahydrophthalic acid, tetrahydrophthalic acid, dodecanedioic acid, adipic acid, azelaic acid, pyromellitic acid and/or trimellitic acid, their acid anhydrides and/or methyl esters are present as additional acids, and also isononanoic acid and/or 2-ethylhexanoic acid, alone or in mixtures.

8. Radiation-curable adhesion-promoting composition according to any one of the preceding claims, **characterized in that** ethylene glycol, 1,2- and/or 1,3-propanediol, diethylene, dipropylene, triethylene and/or tetraethylene glycol, 1,2- and/or 1,4-butanediol, 1,3-butylethylpropanediol, 1,3-methylpropanediol, 1,5-pentanediol, cyclohexanedimethanol, glycerol, hexanediol, neopentyl glycol, trimethylolethane, trimethylolpropane and/or pentaerythritol, bisphenol A, B, C and/or F, norbornylene glycol, 1,4-benzyldimethanol and -diethanol, 2,4-dimethyl-2-ethylhexane-1,3-diol, alone or in mixtures, are present as additional alcohols.

9. Radiation-curable adhesion-promoting composition according to any one of the preceding claims, **characterized in that** the alcohol component is composed of at least 20% of the isomers according to Claim 1 or 2.

10. Radiation-curable adhesion-promoting composition according to any one of the preceding claims, **characterized in that** the alcohol component is composed of at least 50% of the isomers according to Claim 1 or 2.

11. Radiation-curable adhesion-promoting composition according to any one of the preceding claims, **characterized in that** the alcohol component is composed of at least 90% of the isomers according to Claim 1 or 2.

12. Radiation-curable adhesion-promoting composition according to any one of the preceding claims, **characterized in that** the alcohol component is composed of 100% of the isomers according to Claim 1 or 2.

13. Radiation-curable adhesion-promoting composition according to any one of the preceding claims, **characterized in that** fumaric acid and/or maleic acid (anhydride) are present as α,β-unsaturated acid component.

14. Radiation-curable adhesion-promoting composition according to any one of the preceding claims, **characterized in that** adipic acid and/or phthalic acid (anhydride) are present as further dicarboxylic acid component.

15. Radiation-curable adhesion-promoting composition according to any one of the preceding claims, **characterized in that** the alcohol component is present in a molar ratio of from 0.5 to 2.0:1 with respect to the acid component.

16. Radiation-curable adhesion-promoting composition according to any one of the preceding claims, **characterized in that** the alcohol component is present in a molar ratio of from 0.8 to 1.5:1 with respect to the acid component.

17. Radiation-curable adhesion-promoting composition according to any one of the preceding claims, **characterized in that** the alcohol component is present in a molar ratio of from 1.0 to 1.1:1 with respect to the acid component.

18. Radiation-curable adhesion-promoting composition according to any one of the preceding claims, **characterized in that** said composition has an acid number of between 1 and 200 mg KOH/g, preferably between 1 and 100, more preferably between 1 and 50 mg KOH/g.

19. Radiation-curable adhesion-promoting composition according to any one of the preceding claims, **characterized in that** said composition has an OH number of between 1 and 200 mg KOH/g, preferably between 1 and 100, more preferably between 1 and 50 mg KOH/g.

20. Radiation-curable adhesion-promoting composition according to any one of the preceding claims, **characterized in that** acrylic acid and/or methacrylic acid, C1-C40 alkyl esters and/or cycloalkyl esters of methacrylic acid and/or acrylic acid, glycidyl methacrylate, glycidyl acrylate, 1,2-epoxybutyl acrylate, 1,2-epoxybutyl methacrylate, 2,3-epoxycyclopentyl acrylate, 2,3-epoxycyclopentyl methacrylate, and also the analogous amides and/or styrene and/or derivatives thereof, alone or in mixtures, are present as component B) (reactive diluent(s)).

21. Radiation-curable adhesion-promoting composition according to any one of the preceding claims, **characterized in that** phenoxyethyl acrylate, ethoxyethoxyethyl acrylate, isodecyl acrylate and isobornyl acrylate, alone or in mixtures, are present as component B) (reactive diluent(s)).

22. Radiation-curable adhesion-promoting composition according to any one of the preceding claims, **characterized in that** di-, tri- and/or tetraacrylates and their methacrylate analogues, alone or in mixtures, are present as component B) (reactive diluent(s)).

23. Radiation-curable adhesion-promoting composition according to any one of the preceding claims, **characterized in that** di-, tri- and/or tetraacrylates and their methacrylate analogues of ethylene glycol, 1,2-, 1,3-propanediol, diethylene, di- and tripropylene, triethylene and tetraethylene glycol, 1,2-, 1,4-butanediol, 1,3-butylethylpropanediol, 1,3-methylpropanediol, 1,5-pentanediol, 1,4-bis(hydroxymethyl)cyclohexane (cyclohexanedimethanol), glycerol, hexanediol, neopentyl glycol, trimethylolethane, trimethylolpropane, pentaerythritol, bisphenol A, B, C and F, norbornylene glycol, 1,4-benzyldimethanol and -diethanol, 2,4-dimethyl-2-ethylhexane-1,3-diol, 1,4- and 2,3-butylene glycol, di-β-hydroxyethylbutanediol, 1,5-pentanediol, 1,6-hexanediol, 1,8-octanediol, decanediol, dodecanediol, neopentyl glycol, cyclohexanediol, trimethylolpropane, 3(4),8(9)-bis(hydroxymethyl)tricyclo[5.2.1.02,6]decane, 2,2-bis(4-hydroxycyclohexyl)propane, 2,2-bis[4-(β-hydroxyethoxy)phenyl]propane, 2-methylpropane-1,3-diol, 2-methylpentane-1,5-diol, 2,2,4(2,4,4)-trimethylhexane-1,6-diol, hexane-1,2,6-triol, butane-1,2,4-triol, tris(β-hydroxyethyl)isocyanurate, mannitol, sorbitol, polypropylene glycols, polybutylene glycols, xylylene glycol or neopentyl glycol hydroxypivalate, alone or in mixtures, are present as component B) (reactive diluent(s)).

24. Radiation-curable adhesion-promoting composition according to any one of the preceding claims, **characterized in that** di- and/or tripropylene glycol diacrylate, hexanediol diacrylate, trimethylolpropane triacrylate, alone or in a mixture, are present.

25. Radiation-curable adhesion-promoting composition according to any one of the preceding claims, **characterized in that** the alcohol component is composed of at least 90% of Dicidol mixture according to Claim 1 and/or Claim 2 and comprises fumaric acid and/or maleic acid (anhydride) in a diol/acid ratio of from 0.9 to 1.1:1.

26. Radiation-curable adhesion-promoting composition according to any one of the preceding claims, **characterized in that** additionally dodecanedioic acid, adipic acid and/or phthalic acid (anhydride) are present as acid component in a ratio of α,β-unsaturated acid(s) to additional acid of from 3:1 to 1:4, preferably from 1:1 to 1:2.

27. Process for preparing radiation-curable adhesion-promoting compositions composed of
A) one or more than one unsaturated amorphous polyester composed of at least one α,β-unsaturated dicarboxylic acid component and an alcohol component, the alcohol component being composed of a Dicidol mixture of the isomeric compounds 3,8-bis(hydroxymethyl)tricyclo[5.2.1.02,6]decane, 4,8-bis(hydroxymethyl)tricyclo[5.2.1.02,6]decane and 5,8-bis (hydroxymethyl) tricyclo[5.2.1.02,6]decane, where each isomer can be present in the mixture in a fraction of from 20% to 40%, the sum of the three isomers making from 90% to 100% and said mixture being present at not less than 5% in the alcohol component of the polyester;
and
B) one or more than one polymerizable solvent (reactive diluent) which contains acrylically or methacrylically unsaturated double bonds, by reacting the starting components of A) at a temperature of from 150 to 270°C, preferably from 160 to 230°C, more preferably from 160 to 200°C and subsequently diluting the reaction product with a reactive diluent B) at temperatures below 200°C, preferably below 180°C, more preferably below 160°C.

28. Use of unsaturated amorphous polyesters A) and at least one polymerizable solvent (reactive diluent) B) according to Claims 1-26 as a radiation-curable adhesion-promoting additive.

29. Use according to Claim 28 as a radiation-curable adhesion-promoting additive in radiation-curable coating materials which comprise water and/or solvents or are free from organic solvents and/or water.

30. Use according to Claim 29 as a radiation-curable adhesion-promoting additive in coating materials, adhesives, lamination systems, printing and other inks, polishes, glazes, pigment pastes, filling compounds, cosmetics articles, packaging materials and/or sealants and insulants.

31. Use according to Claim 30 for metallic or mineral substrates, wood, paper, plastic, ceramic or glass.

## Revendications

1. Composition durcissable par un rayonnement, améliorant l'adhérence, constituée par
A) au moins un ou plusieurs polyesters insaturés, amorphes, constitués par au moins un composant acide dicarboxylique α,β-insaturé et un composant alcool, le composant alcool étant constitué par un mélange Dicidol des composés isomères 3,8-bis(hydroxyméthyl)tricyclo[5,2,1,0^{2,6}]décane, 4,8-bis(hydroxyméthyl)tricyclo[5,2,1,0^{2,6}]décane et 5,8-bis(hydroxyméthyl)tricyclo[5,2,1,0^{2,6}]décane, chaque isomère pouvant être contenu en une proportion de 20 à 40% dans le mélange et la somme des trois isomères étant de 90 à 100%, et le mélange étant contenu au moins à raison de 5% dans le composant alcool du polyester ; et
B) au moins un ou plusieurs solvants polymérisables (diluants réactifs), qui présentent des doubles liaisons acryliquement ou méthacryliquement insaturées.

2. Composition durcissable par un rayonnement, améliorant l'adhérence selon la revendication 1, **caractérisée en ce qu'**elle contient jusqu'à 10% d'autres isomères du Dicidol et/ou des diols trimères et/ou isomères supérieurs de produits de transformation de Diels-Alder du cyclopentadiène.

3. Composition durcissable par un rayonnement, améliorant l'adhérence selon l'une quelconque des revendications précédentes, **caractérisée en ce que** le composant acide contient en outre des acides monocarboxyliques et/ou dicarboxyliques et/ou polycarboxyliques aromatiques et/ou aliphatiques et/ou cycloaliphatiques.

4. Composition durcissable par un rayonnement, améliorant l'adhérence selon l'une quelconque des revendications précédentes, **caractérisée en ce que** le composant acide est constitué partiellement ou totalement par des anhydrides et/ou des esters d'alkyle.

5. Composition durcissable par un rayonnement, améliorant l'adhérence selon l'une quelconque des revendications précédentes, **caractérisée en ce que** le composant alcool contient d'autres diols et/ou polyols linéaires et/ou ramifiés, aliphatiques et/ou cycloaliphatiques et/ou aromatiques.

6. Composition durcissable par un rayonnement, améliorant l'adhérence selon l'une quelconque des revendications précédentes, **caractérisée en ce que** l'acide citraconique, fumarique, itaconique, maléique et/ou mésaconique est contenu comme acide dicarboxylique α,β-insaturé.

7. Composition durcissable par un rayonnement, améliorant l'adhérence selon l'une quelconque des revendications précédentes, **caractérisée en ce** l'acide phtalique, isophtalique, téréphtalique, 1,4-cyclohexanedicarboxylique, succinique, sébacique, méthyltétrahydrophtalique, méthylhexahydrophtalique, hexahydrophtalique, tétrahydrophtalique, dodécanedioïque, adipique, azélaïque, pyromellitique et/ou trimellitique, leurs anhydrides d'acide et/ou esters méthyliques ainsi que l'acide isononanoïque et/ou l'acide 2-éthylhexanoïque sont contenus comme acides supplémentaires, seuls ou en mélanges.

8. Composition durcissable par un rayonnement, améliorant l'adhérence selon l'une quelconque des revendications précédentes, **caractérisée en ce que** l'éthylèneglycol, le 1,2-propanediol et/ou le 1,3-propanediol, le diéthylèneglycol, le dipropylèneglycol, le triéthylèneglycol, le tétraéthylèneglycol, le 1,2-butanediol et/ou le 1,4-butanediol, le 1,3-butyléthylpropanediol, le 1,3-méthylpropanediol, le 1,5-pentanediol, le cyclohexanediméthanol, le glycérol, l'hexanediol, le néopentylglycol, le triméthyloléthane, le triméthylolpropane et/ou le pentaérythritol, le bisphénol A, B, C, F, le norbornylèneglycol, le 1,4-benzyldiméthanol et le 1,4-benzyldiéthanol, le diméthyl-2-éthylhexane-1,3-diol seuls ou en mélanges sont contenus comme alcools supplémentaires.

9. Composition durcissable par un rayonnement, améliorant l'adhérence selon l'une quelconque des revendications précédentes, **caractérisée en ce que** le composant alcool est constitué au moins à raison de 20% par les isomères selon la revendication 1 ou 2.

10. Composition durcissable par un rayonnement, améliorant l'adhérence selon l'une quelconque des revendications précédentes, **caractérisée en ce que** le composant alcool est constitué au moins à raison de 50% par les isomères selon la revendication 1 ou 2.

11. Composition durcissable par un rayonnement, améliorant l'adhérence selon l'une quelconque des revendications précédentes, **caractérisée en ce que** le composant alcool est constitué au moins à raison de 90% par les isomères selon la revendication 1 ou 2.

12. Composition durcissable par un rayonnement, améliorant l'adhérence selon l'une quelconque des revendications précédentes, **caractérisée en ce que** le composant alcool est constitué à raison de 100% par les isomères selon la revendication 1 ou 2.

13. Composition durcissable par un rayonnement, améliorant l'adhérence selon l'une quelconque des revendications précédentes, **caractérisée en ce que** l'acide fumarique et/ou (l'anhydride de) l'acide maléique sont contenus comme composant acide α,β - insaturé.

14. Composition durcissable par un rayonnement, améliorant l'adhérence selon l'une quelconque des revendications précédentes, **caractérisée en ce que** l'acide adipique et/ou (l'anhydride de) l'acide phtalique sont contenus comme autre composant acide dicarboxylique.

15. Composition durcissable par un rayonnement, améliorant l'adhérence selon l'une quelconque des revendications précédentes, **caractérisée en ce que** le composant alcool est contenu en un rapport molaire de 0,5 à 2,0:1 au composant acide.

16. Composition durcissable par un rayonnement, améliorant l'adhérence selon l'une quelconque des revendications précédentes, **caractérisée en ce que** le composant alcool est contenu en un rapport molaire de 0,8 à 1,5:1 au composant acide.

17. Composition durcissable par un rayonnement, améliorant l'adhérence selon l'une quelconque des revendications précédentes, **caractérisée en ce que** le composant alcool est contenu en un rapport molaire de 1,0 à 1,1:1 au composant acide.

18. Composition durcissable par un rayonnement, améliorant l'adhérence selon l'une quelconque des revendications précédentes, **caractérisée en ce qu'**elle présente un indice d'acide entre 1 et 200 mg de KOH/g, de préférence entre 1 et 100, de manière particulièrement préférée entre 1 et 50 mg de KOH/g.

19. Composition durcissable par un rayonnement, améliorant l'adhérence selon l'une quelconque des revendications précédentes, **caractérisée en ce qu'**elle présente un indice OH entre 1 et 200 mg de KOH/g, de préférence entre 1 et 100, de manière particulièrement préférée entre 1 et 50 mg de KOH/g.

20. Composition durcissable par un rayonnement, améliorant l'adhérence selon l'une quelconque des revendications précédentes, **caractérisée en ce que** l'acide acrylique et/ou l'acide méthacrylique, les esters C₁-C₄₀-alkyliques et/ou les esters cycloalkyliques de l'acide méthacrylique et/ou acrylique, le méthacrylate de glycidyle, l'acrylate de glycidyle, l'acrylate de 1,2-époxybutyle, le méthacrylate de 1,2-époxybutyle, l'acrylate de 2,3-époxycyclopentyle, le méthacrylate de 2,3-époxycyclopentyle ainsi que les amides analogues et/ou le styrène et/ou leurs dérivés, seuls ou en mélanges sont contenus comme composant B) (diluant réactif).

21. Composition durcissable par un rayonnement, améliorant l'adhérence selon l'une quelconque des revendications précédentes, **caractérisée en ce que** l'acrylate de phénoxyéthyle, l'acrylate d'éthoxyéthoxyéthyle, l'acrylate d'isodécyle et l'acrylate d'isobornyle, seuls ou en mélanges sont contenus comme composant B) (diluant réactif).

22. Composition durcissable par un rayonnement, améliorant l'adhérence selon l'une quelconque des revendications précédentes, **caractérisée en ce que** les diacrylates, les triacrylates et/ou les tétraacrylates et leurs analogues de méthacrylate, seuls ou en mélanges sont contenus comme composant B) (diluant réactif).

23. Composition durcissable par un rayonnement, améliorant l'adhérence selon l'une quelconque des revendications précédentes, **caractérisée en ce que** les diacrylates, les triacrylates, et/ou les tétraacrylates et leurs analogues de méthacrylate d'éthylèneglycol, de 1,2-propanediol, de 1,3-propanediol, de diéthylèneglycol, de dipropylèneglycol et de tripropylèneglycol, de triéthylèneglycol, de tétraéthylèneglycol, de 1,2-butanediol, de 1,4-butanediol, de 1,3-butyléthylpropanediol, de 1,3-méthylpropanediol, de 1,5-pentanediol, de bis-(1,4-hydroxyméthyl)cyclohexane (cyclohexanediméthanol), de glycérol, d'hexanediol, de néopentylglycol, de triméthyloléthane, de triméthylolpropane, de pentaérythritol, de bisphénol A, B, C, F, de norbornylèneglycol, de 1,4-benzyldiméthanol, de 1,4-benzyldiéthanol, de 2,4-diméthyl-2-éthylhexane-1,3-diol, de 1,4-butylèneglycol et de 2,3-butylèneglycol, de di-β-hydroxyéthylbutanediol, de 1,5-pentanediol, de 1,6-hexanediol, de 1,8-octanediol, de décanediol, de dodécanediol, de néopentylglycol, de cyclohexanediol, de triméthylolpropane, de 3(4),8(9)-bis(hydroxyméthyl)-tricyclo[5,2,10^{2,6}]décane, de 2,2-bis-(4-hydroxycyclohexyl)propane, de 2,2-bis-[4-(β-hydroxyéthoxy)phényl]propane, de 2-méthylpropanediol-1,3, de 2-méthylpentanediol-1,5, de 2,2,4(2,4,4)-triméthylhexanediol-1,6, d'hexanetriol-1,2,6, de butanetriol-1,2,4, de tris-(β-hydroxyéthyl)isocyanurate, de mannitol, de sorbitol, de polypropylèneglycols, de polybutylèneglycols, de xylylèneglycol ou l'ester néopentylglycolique de l'acide hydroxypivalique, seuls ou en mélanges sont contenus comme composant B) (diluant réactif).

24. Composition durcissable par un rayonnement, améliorant l'adhérence selon l'une quelconque des revendications précédentes, **caractérisée en ce qu'**elle contient du diacrylate de dipropylèneglycol et/ou du diacrylate de tripropylèneglycol, du diacrylate d'hexanediol, du triacrylate de triméthylolpropane, seuls ou en mélange.

25. Composition durcissable par un rayonnement, améliorant l'adhérence selon l'une quelconque des revendications précédentes, **caractérisée en ce que** le composant alcool est constitué par au moins 90% de mélange Dicidol selon la revendication 1 et/ou selon la revendication 2 et l'acide fumarique et/ou (l'anhydride de) l'acide maléique est/sont contenu(s) dans un rapport diol/acide de 0,9 à 1,1:1.

26. Composition durcissable par un rayonnement, améliorant l'adhérence selon l'une quelconque des revendications précédentes, **caractérisée en ce qu'**elle contient en outre de l'acide dodécanedioïque, de l'acide adipique et/ou de (l'anhydride de) l'acide phtalique comme composant acide dans un rapport acide α,β-insaturé à acide supplémentaire de 3:1 à 1:4, de préférence de 1:1 à 1:2.

27. Procédé pour la préparation de compositions durcissables par un rayonnement, améliorant l'adhérence, constituées par
A) un ou plusieurs polyesters insaturés, amorphes, constitués par au moins un composant acide dicarboxylique α,β-insaturé et un composant alcool, le composant alcool étant constitué par un mélange Dicidol des composés isomères 3,8-bis(hydroxyméthyl)tricyclo[5,2,1,0^{2,6}]décane, 4,8-bis(hydroxyméthyl)tricyclo[5,2,1,0^{2,6}]décane et 5,8-bis(hydroxyméthyl)tricyclo[5,2,1,0^{2,6}]décane, chaque isomère pouvant être contenu en une proportion de 20 à 40% dans le mélange et la somme des trois isomères étant de 90 à 100%, et le mélange étant contenu au moins à raison de 5% dans le composant alcool du polyester ; et
B) un ou plusieurs solvants polymérisables (diluants réactifs), qui présentent des doubles liaisons acryliquement ou méthacryliquement insaturées, par transformation des composants de départ de A) à une température de 150 à 270°C, de préférence de 160 à 230°C, de manière particulièrement préférée de 160 à 200°C et dilution consécutive avec un diluant réactif B) à des températures inférieures à 200°C, de préférence inférieures à 180°C, de manière particulièrement préférée inférieures à 160°C.

28. Utilisation de polyesters insaturés, amorphes A) et d'au moins un solvant polymérisable (diluant réactif) B) selon les revendications 1-26 comme additif durcissable par un rayonnement, améliorant l'adhérence.

29. Utilisation selon la revendication 28 comme additif durcissable par un rayonnement, améliorant l'adhérence dans des agents de revêtement durcissables par un rayonnement, qui contiennent de l'eau et/ou un solvant ou sont exempts de solvants organiques et/ou d'eau.

30. Utilisation selon la revendication 29 comme additif durcissable par un rayonnement, améliorant l'adhérence dans des substances de revêtement, des adhésifs, des laminés, des encres d'imprimerie et des teintures, des agents de polissage, des lasures, des pâtes pigmentaires, des masses de bouchage, des objets cosmétiques, des matériaux d'emballage et/ou des substances d'étanchéité et des isolants.

31. Utilisation selon la revendication 30 pour des substrats métalliques ou minéraux, le bois, le papier, le matériau synthétique, la céramique ou le verre.
